# EUROPEAN PATENT SPECIFICATION

(11) **EP 0 738 798 B1**
(45) Date of publication and mention of the grant of the patent: **28.06.2000**
(21) Application number: 96200926.2
(22) Date of filing: 17.04.1996
(51) Int. Cl.: D06F 93/00

(54) **A method for receiving and sorting for a washing treatment articles of clothing that have to be washed**
Methode zum Übernehmen und Sortieren von Kleidungsstücken für eine Waschbehandlung
Méthode pour recevoir et assortir des pièces de vêtements pour un traitement de lavage

(30) Priority: 18.04.1995 NL 1000155
(43) Date of publication of application: 23.10.1996
(73) Proprietor: De Lelie Tiel B.V., 4005 EH Tiel (NL)
(72) Inventor: Van Lieshout, Petrus Bernardus Jozef, Appeltern (NL); De Vaan, Hendrikus Theodorus Marie, 6617 CA Bergharen (NL)
(74) Representative: Ferguson, Alexander

(56) References cited:
- EP-A- 0 440 306
- EP-A- 0 589 821
- DE-A- 4 042 375
- DE-A- 4 113 369
- FR-A- 2 610 678
- US-A- 3 780 543
- US-A- 5 299 134

## Description

The invention relates to a method for receiving and sorting articles of clothing for a cleaning treatment thereof, like washing or dry-cleaning. In the following, the word "washing" is used for both treatments.

In industrial laundries dirty articles of clothing, in bulk and unsorted, are supplied with the aid of lorries or delivery vans in which the articles of clothing are transported in laundry bags. These laundry bags may be received in rolling containers that may belong to several customers or to the same customer. The articles of clothing in question are (uniform) professional dress, such as company clothing, e.g. overalls, clothing of supermarket chains and/or service dress e.g. of institutions such as hospitals, and outer garments such as trousers, overcoats of patients in institutions and homes.

The laundry bags with the articles of clothing that have to be washed are deposited at an intake station, where workmen pick the article of clothing up by hand to inspect whether an owner or hirer label is present and to check whether the pockets are empty. The articles of clothing are then, based on the workmen's knowledge as to the required washing process for the garment in question, supplemented, if necessary, with information on a wash label present in the article of clothing, thrown in one of a number of bags or containers kept in readiness for various washing processes, which is a rather uncontrolled procedure. After the containers have been filled, they are transported to a washing machine that has been preset for the appropriate washing process, where the articles of clothing can be transferred into the washing machine.

In these known methods for receiving and sorting, it often occurs that an article of clothing does not end up in the proper container and falls into a wrong container or even beside the containers. There is a considerable chance that mistakes will be made when several workmen work at the intakestation at the same time. The paths of articles of clothing that are thrown will then be able to cross each other often, with sorting errors as a result. Moreover, a workman might make an error of judgement as to the required washing process, which will cause clothing to be sorted incorrectly.

A system for receiving, inspecting and laundering customer pre-sorted garments is known from US-A-3.780.543.

According to a more recent receiving and sorting method, as described in the preamble of claim 1, the workmen throw the hand-picked articles of clothing, after having inspected them in the way as indicated above, onto a conveyor track or into a collecting container that, at a number of places, is provided with retractable portions that are situated above just as many further conveyors that lead to the differently preset washing treatment machines or above further conveyer containers or bags. Here, the articles of clothing may be provided with a transponder, usually a chip, from which an individual number of an article of clothing can be read with the aid of an adapted reading device. This reading device is connected to a database in which all kinds of particulars such as owner/hirer, user of the article of clothing, the kind of clothing, date of purchase, proper washing process etc. are entered, in each case linked to the individual number of an article of clothing. Then a control device, on the basis of the information of the reading device/database, ensures that the correct portion of the conveyor track or of a collecting container is retracted or that an identified article of clothing arrives at the proper further conveyor in order to be transported to the proper washing machine.

For this system to operate properly, it is essential that the articles of clothing are carried past the reading device one after the other and are presented to the sorting device one after the other. However, at the intake control stations more people at once should be able to be taking dirty articles of clothing from the piles or out of the laundry bags and placing or throwing them onto the conveying system, especially conveyor tracks or collecting containers. In spite of agreements made between those people working at the intake station, it often occurs that articles of clothing arrive on a conveyor track or collecting container more or less at the same time and coincide at least partially. As a result of this accumulation or coinciding the chips frequently lie too close to one another and there is a considerable chance that one of the coinciding articles of clothing is incorrectly read by the reading device or not read at all and that, in the following sorting step, at least one of the articles of clothing will be sorted incorrectly.

As as result, a perfect view of the course of the articles of clothing can no longer be obtained, owing to the imperfect identification. Although a non-identified article of clothing does participate in a washing process, the arrival of that article of clothing at the laundry will not have been noted by the reading device and will therefore not have been passed on to the central database connected thereto. Another result is that articles of clothing, having been subjected to a wrong washing process, are rendered unsuitable for further use or are washed insufficiently, which may lead to complaints from the customers. Moreover, the accumulation at the sorting station may lead to accumulation or jamming of machine parts, causing the feeding process to come to a temporary standstill.

It is the aim of the invention to improve on this and for that purpose it provides a method of the kind indicated in the preamble, wherein the articles of clothing are supplied in bulk and unsorted and are carried from the place of intake along a reading station by transport means, with the aid of which the method of washing chosen and required for each specific article of clothing is determined, after which the transport means are operated by the sorting means that are controlled by the data given by the reading station, in order to classify the articles of clothing according to the kind of washing method, and wherein the articles of clothing, at the intake, are placed in conveyor holders that are driven on a rail and the articles of clothing in the individual conveyor holders are carried along the reading station at suitable intermediate intervals, in series and singularly.

By placing the articles of clothing in conveyor holders upon taking them in, the articles of clothing are separated from one another at that very moment and will remain separated during further transport, both when they are carried past the reading station and when they are treated by the sorting means. Several people may continue to work at the intake station without having to pay attention to one another in order to prevent articles of clothing from coinciding. Each person at the intake station may take articles of clothing from the bulk in succession and place them in conveyor holders, after which appropriate supply means, known per se, ensure that conveyor holders arriving from different supply lines are placed in succession on a central line.

Preferably, the articles of clothing are individually hung onto conveyor clamps that are moved along a rail in series. The conveyor clamps are then preferably handled in such a way that the clamp openings are oriented substantially vertically. As a result, as will be elucidated hereafter, not only will the in-feed of the articles of clothing be promoted, but also the unloading of the articles of clothing at the proper place.

Owing to the fact that the articles of clothing, individually and in series, preferably hanging onto conveyor clamps, are transported past a central rail, several methods of sorting are possible. According to a first development of the method according to the invention sorting takes place in that, downstream from the reading station, a number of clothing containers or bags are arranged, over which the conveyor holders, particularly the conveyor clamps, are moved, and wherein the sorting means operate the conveyor holders above the correct clothing container, in dependence on the distance to the reading station and the speed of conveyance, or on a count of the holders that have passed the reading station and the sorting means and on the read-out of the reading station. Each clothing container is assigned to a certain washing process or a certain type of clothing.

According to a second development, downstream from the reading station the central conveyor track is branched off into at least a number of parallel conveyor tracks that can be assigned to various washing programmes and the holders are sent to the correct conveyor tracks in dependence on the read-out of the distance to the reading station and the speed of conveyance or on the afore-said count. These conveyor tracks may lead directly to the correct washing machine or be arranged above one or more clothing containers or bags, so that the articles of clothing may be delivered there by operating the holders.

A combination of these two systems is possible. It is conceivable to arrange a series of clothing containers under the paralles conveyor tracks, which containers are intended for the same washing process but arranged in order to allow the connection with the washing process to be more flexible.

The invention further relates to a conveyor clamp suitable for implementing the above method.

A clamp as described in the preamble of claim 7 is known from DE-A-4042375.

In the system known so far for supplying and sorting dirty clothing, each article of clothing, regardless of its nature or shape, could be placed on the conveyor track or collecting container immediately. If existing conveyor clamps are used in the new system according to the invention, problems may arise when the conveyor clamps have to transport clothing of a different nature, e.g. overcoats and trousers on the one hand and shirts on the other hand. Occasionally, the existing conveyor clamps are not capable of transporting both types of clothing, hanging on the rail, from the intake station to the sorting station smoothly and reliably, and of being operated there in a reliable way in order to deliver the article of clothing at the correct place.

It is now an object of the invention to improve on this and for this purpose a conveyor clamp is provided for articles of clothing that have to be washed, comprising a trolley for support on a conveyor rail, a first clamp and a hinged second clamp, which clamps are connected to the trolley by means of connecting means, in which the first clamp and the second clamp determine a mutual clamping face and, hereabove, determine a receiving space for an upper part of an article of clothing that has to be clamped, in which the first clamp is configured such, that it recedes above the clamping face in order to co-determine the receiving space.

The receiving space provides space for that portion of any article of clothing whatsoever (trousers, sweaters, etc.) that is situated above the clamping face. Said upper portion of the article of clothing will, in that portion-of the receiving space that is configurated by the receding portion of the first clamp, substantially lie outside of the swinging path of the outer end of the second clamp when it is being operated to deliver the article of clothing.

This reliable functioning is enhanced even further on account of the fact that in a simple preferred embodiment of the second clamp, at a distance from the clamping face, the clamp is provided with a cam, preferably at the opposite end of the clamp, which cam is adapted for being engaged by stationary arranged cam operating means when the conveyor clamp moves along it, as a result of which the number of moving parts in the conveyor clamp is reduced to a minimum. Consequently, dust emanating from the articles of clothing and parts of the articles of clothing themselves will hardly be able to stand in the way of a proper working of the conveyor clamps.

Both clamps are preferably configurated to recede above the clamping face, i.e. the (vertical) face in which both clamping parts will make contact with each other in unloaded position, in order to determine the receiving space. In this way a receiving space of maximum dimensions may be provided.

The receiving space is preferably slightly staggered with respect to the clamping face in a horizontal direction towards the first clamp. When the first clamp is solidly arranged, the upper part of the article of clothing will consequently be kept out of the swinging path of the second clamp in a positive way, as a result of which the insertion into conveyor clamps and the unloading therefrom may be effected in a highly reliable manner.

The invention will now be elucidated with the aid of the exemplary embodiments depicted in the enclosed drawings.

The following is shown in:
figure 1: a top view of a device with which the method according to the invention can be performed;
figure 2: a view of that part of the intake station where the articles of clothing are inserted onto conveyor clamps;
figure 3: a diagrammatical representation of a possible embodiment of a sorting station in the method according to the invention;
figure 4: a front view of a conveyor clamp according to the invention; and
figure 5: an isometrical view of the conveyor clamp of figure 4.

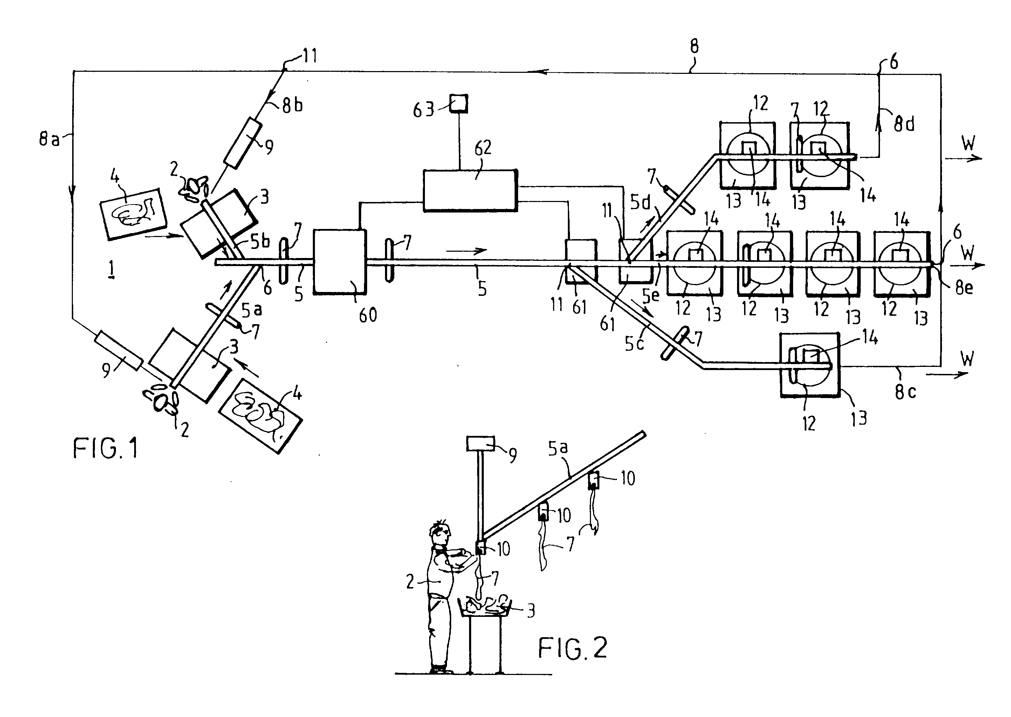

In the top view of figure 1 the supply side is shown on the left and the sorting side on the right. Dirty articles of clothing, kept in readiness in laundry bags in rolling containers 4 that have been delivered by delivery vans, for example, are hung from trays 3 onto conveyor clamps 10 (vide figure 2) by persons 2. The articles of clothing 7 are then individually hanging on individual conveyor clamps 10, carried past overhead conveyors 5a and 5b to a switch 6, wherein the overhead conveyors 5a and 5b converge in a central overhead conveyor 5. By means of non-depicted means known, however, to the expert, the conveyor clamps 10, hanging from the overhead conveyor 5a, are driven forward. The central overhead conveyor 5 passes through a reading station 60 and then to sorting station 61 with switch 11, where the overhead conveyor 5 is divided into an overhead conveyor 5c and an overhead conveyor 5e, from which last overhead conveyor, at the next sorting station 61 with switch 11, a third overhead conveyor 5d is branched off. At a delivery station under the overhead conveyors 5c, 5d and 5e, clothing containers 13 are arranged that are mobile in order to take the articles of clothing received therein to the washing process suitable for these articles of clothing according to arrows W.

It is schematically shown that the overhead conveyors 5c, 5d and 5e, downstream from the place where the articles of clothing have been delivered from the conveyor clamps 10, merge into to overhead conveyors 8c, 8d and 8e that converge at the mergers or dose-measuring devices 6 to form a central return conveyor 8 for the conveyor clamps, which return conveyor, at a switch 11, is divided again into return conveyors 8a and 8b that end in buffers 9 for the conveyor clamps, directly near the place where the persons 2 hang the articles of clothing in the conveyor clamps. The embodiment of the return conveyor 8 may be equal to that of the overhead conveyor 5, yet be alternatively simpler because it does not necessarily have to be situated high above a basis because no articles of clothing have to be carried.

In operation, the conveyor clamps 10 hang in readiness in buffer 9 that leads down to the place (vide figure 2) where the person 2 is standing with, within reach, a container 3 with articles of clothing 7. The person 2 picks up an article of clothing 7 and looks to see if a label has been attached. In the affirmative, he inserts the article of clothing 7 into the conveyor clamp 10 with a single upward movement, after which the article of clothing will continue to hang in it by its own weight.

With 5b conveyor clamps are supplied onto which articles of clothing 7 are hung by the other person 2. At the merger 6, the clamps 10, hanging onto the conveyors 5a and 5b, are alternately, one by one, or in groups, transferred to the central overhead conveyor 5 in a suitable way that is known per se. There, the articles of clothing hang in series, which is effected independent of the moment in time at which the persons have hung the articles of clothing in the conveyor clamps 10.

The articles of clothing 7 are provided with chips with an individual, unique number that is also entered in database 63. The number on the chip is read in reading station 60, where the articles of clothing 7, one after the other, are presented individually to reading means for that purpose, which are already known per se. These reading means 60 send the number that has been read to the central control unit 62 that consults the database 63 at that number. In the database 63, under the numbers of the articles of clothing, information is stored relating to the kind of washing process, user, date of purchase, etc. Taking into account the time that passes for the movement of the conveyor clamps 10 between the reading device 60 and the shunting stations 61, or, alternatively, on the basis of a count and comparison of clamps that have passed along the reading station and sorting station, the shunting stations 61 with switch 11 are operated by the control unit 62 dependent on the number read out from the chip, in combination with the information concerning the washing process required for that number stored in database 63, in order to deliver the conveyor clamp 10 concerned to the overhead conveyor 5c, 5d or 5e.

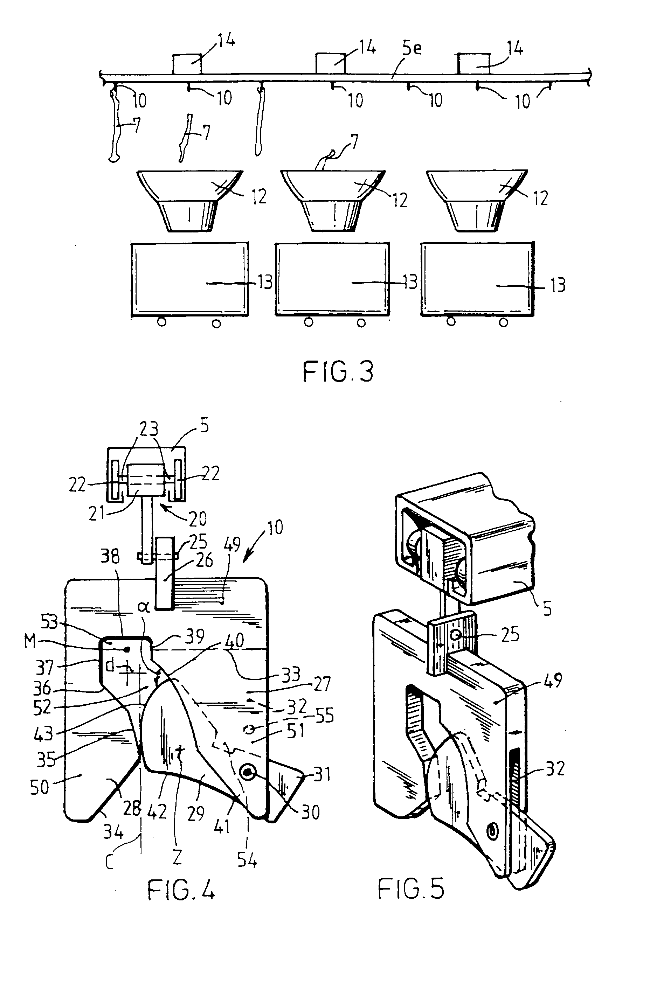

When, after that, the conveyor clamps 10, provided with the articles of clothing 7 and hanging from the overhead conveyor 5c, 5d or 5e have arrived above the delivery station, depicted on the right hand side, they are opened with the aid of stationarily arranged clamp control means 14 so that, as shown in figure 3, the article of clothing 7 drops from the conveyor clamp 10 into a receiving funnel 12 and herethrough into a mobile washing tray or laundry bag 13.

The operating means 142 for opening the conveyor clamps may be provided with means that are controlled by the control means 62 to switch off the function, for instance dependent on the number of articles of clothing 7 delivered by the respective operating means 14. In this way, along one overhead conveyor, first a first tray 13 may be filled and then the operating means 14 above it may be put out of operation so that the conveyor clamps with the articles of clothing 7 arrive at the next operating means 14, downstream from it, to deliver the articles of clothing to the tray 13 arranged there below. The operating means could for instance be a bar hinged at one end and arranged parallel to the rail, which bar, at its other end, is moved in a vertical direction so as to arrive within the path of motion of a clamp control part on the clamp, such as a cam, in order to gradually allow the movable clamping part to turn to an open position.

Instead of the trays 13, bags may also be used, which bags are transported at a further overhead track and of which the bottom side may automatically be opened, as is known in the laundry technique.

It will be clear that the system depicted in figure 1 may be extended, for instance by arranging five or ten parallel intake lines 5a, 5b etc. that at least converge in one single central overhead conveyor that passes through a reading device. In this way it is ensured that all the articles of clothing, irrespective of the moment in which they are hung into conveyor clamps 10, are still individually read and sorted, the one after the other, so that malfuntions and reading errors are avoided as much as possible.

In figures 4 and 5 the conveyor clamps, hanging vertically from the conveyors 5, are depicted in detail.

In the rail 5, which is dome-shaped, a trolley 20 is accommodated in a mobile way, which trolley is built up of a block 21, on either side of which shafts 23 protrude onto which wheels 22 are bearing-mounted. The trolleys 20 are moved at a suitable, controlled mutual distance along the rail 5 with the aid of a non-depicted conveyor chain provided with flights (pawls), or another known means of transport. Transport can also take place by having the rail 5 inclined.

A stem 24 depends from the block 12, in which stem, with the aid of hinge pin 25, a plate 26 is mounted for rotation in the vertical plane. This manner of hanging a clamp, known among others from the Dutch patent 167.743, ensures that the clamp and, as a result, the article of clothing, hangs in a vertical position all the time, even when the rail 5 inclines up or down.

The plate 26 is secured with the actual conveyor clamp 10 that is formed by a basically U-shaped body 49. The (inverse) U-shaped body 49 comprises a horizontal upper part 39 and a first depending leg 50 and a second depending leg 51. The first leg 50 is solid and forms a first clamping part 28. The second leg 51 forms a cavity 32, bounded at the upper side by the horizontal edge 33 and accommodating a second clamping part 29 whcih is hinged at a hinge pin 30.

The first clamping part 28 has an in-feed edge 34 facing obliquely downwards, which, at its top end, merges into an edge 35 that recedes obliquely and, further upwards, merges into an edge 36 that recedes even more obliquely. At its top end, this edge 36 merges into an edge 37 extending straight upwards, which edge runs upto the horizontal portion 39 of the U-shaped body 49 to merge there into the horizontal bottom edge 38 of said horizontal portion 39. The horizontal edge 38 ends at the beginning of the second leg 51 of the U-shaped body 49, to merge into a vertical downwards extending edge 39 thereof. At its lower end, the edge 39 merges into a concave edge 40, the lower end of which is situated further to the right than its upper end. At its bottom end, the concave edge 40 merges into an edge 41, running obliquely downwards.

The second clamping part 29 itself comprises a lower concave edge 42 that merges into a convex edge 43 that arrives at the edge 40 at an angle α of 90° or greater. The second clamping part 29 has a centre of gravity Z that lies between the clamping face C and hinge pin 30. The weight of the clamping part 29, at least the part at the left side of the hinge pin, has been chosen to be so great that, even for sometimes relatively smooth and light-weight articles of clothing, when the gripping forces resulting from the wedging effect might be insufficient, sufficient holding force can still be generated.

The second clamping part 29 is provided with a recess 54 that, after the clamping part 29 has swung away in upward direction, fits around the pin 55 that prevents the clamping part 29 from continued swinging to the right and the centre of gravity from arriving on the right hand side of the hinge pin 30. Nevertheless, here the recess 54 allows the second clamping part to swing to a sufficient extent.

The edges 34, 41 and 42 form a tapering or converging infeed end for the articles of clothing that have to be hung in the conveyor clamp 10. Here, the concave course of the edge 42 of the second clamping part 29 facilitates the infeed of an article of clothing.

Clamping takes place between the edge 43 of the clamping part 29 and the oblique edge part 53 of the first clamping part 28. In free condition the second clamping part 29 falls against the edge 35, in clamping face C, so that each article of clothing can be clamped thereinbetween. Here, the basically convex form of the clamping edges of both clamping parts ensures a local, high clamping force.

As can be seen above, the clamping point, both legs of the U-shaped body 49 define a receiving space 52 running obliquely to the right, upward and away from the moving clamping part, which receiving space, at its upper end, merges into a substantially rectangular receiving space 53. The centre point M of this receiving space 53 lies at a distance d to the right of the clamping face C in which the clamping point is situated. As a result, those parts of the clamped article of clothing that lie above the clamping point cannot obstruct the second clamping part 39 when it is being operated and swings away and the dropping off of the article of clothing is thus advanced. Moreover, as a result the in-feed of the article of clothing into the conveyor clamp 10 is facilitated, in that the picking up, inspection and insertion can take place in one smooth movement, which is furthermore fully controllable.

At the right hand side the second clamping part 29 is provided with a cam 31, protruding from the U-shaped body 49. This cam 31 can be engaged by stationarily arranged cam operating means such as (non-depicted) stationary rails that have a curved part causing the cam 31 to be pressed downwards in order to let the edge 43 swing away upwards from the edge 35.

On account of its shape, the depicted conveyor clamp 10 is suitable for any type of clothing, whether it consists of one layer of fabric or several, as is the case in the collar of a dustcoat or winter coat.

## Claims

1. A method for receiving and sorting for a washing treatment articles of clothing (7) that have to be washed, wherein the articles of clothing are supplied in bulk, unsorted, and are carried from the place of intake (1) along one or more reading stations (60) by transport means (5) with the aid of which the method of washing chosen and required for each specific article of clothing is determined, after which the transport means are operated by sorting means (61) that are controlled by the data given by the reading station, in order to classify the articles of clothing according to the kind of washing method, characterized in that the articles of clothing (7) at the intake, are placed in conveyor holders (10) that are driven on a rail and the articles of clothing in the individual conveyor holders are carried along the reading station (60) at suitable intermediate intervals, in series and singularly.

2. A method according to claim 1, wherein the articles of clothing (7) are hung into conveyor clamps (10) individually, which conveyor clamps are preferably kept in a vertical position, at least during loading and unloading.

3. A method according to claim 1 or 2, wherein the articles of clothing (7) are taken in in a parallel manner and hung onto conveyor holders of parallel conveyor tracks (5a;5b) wherein the parallel conveyor tracks are united into one track upstream of the reading station (60).

4. A method according to claim 1, 2 or 3, wherein, downstream from the reading station (60), a number of clothing containers (13) are arranged, over which the conveyor holders (10), especially the conveyor clamps, are moved, and wherein the sorting means (61) operate the conveyor holders for unloading above the correct clothing container, in dependence on the distance to the reading station and the speed of conveyance, or on a count of the holders that have passed the reading station and the sorting means and on the read-out of the reading station.

5. A method according to claim 1, 2 or 3, wherein, downstream from the reading station (60), the conveyor track (5) branches off into at least a number of parallel conveyor tracks (5c;5d,5e) that can be assigned to various washing programmes and the holders (10) are sent to the correct conveyor tracks, in dependence on the read-out of the distance to the reading station (60) and the speed of conveyance, or on a count of the holders that have passed the reading station and the sorting means (61).

6. A method according to any one of the preceding claims, wherein the articles of clothing (7) are provided with a chip in which data is stored that has reference to the kind of material, the kind of garment, the manner of washing, the customer, the date of purchase, etc.

7. A conveyor clamp (10) for articles of clothing that have to be washed, comprising a trolley (20) for support on a conveyor rail (5) a first clamp (28) and a hinged second clamp (29), which clamps are connected to the trolley by means of connecting means (24-26), in which the first clamp and the second clamp determine a mutual clamping face (C) and, hereabove, determine a receiving space (53) for an upper part of an article of clothing that has to be clamped, characterized in that the first clamp is configured such, that it recedes above the clamping face (C) in order to co-determine the receiving space.

8. A conveyor clamp according to claim 7, in which the second clamp (29) is provided with a cam (31) that is adapted for being engaged by stationary arranged cam operating means when the conveyor clamp (10) moves along it.

9. A conveyor clamp according to claim 7 or 8, in which both clamps (28,29) are configured to recede above the clamping face (C) in order to determine the receiving space (53).

10. A conveyor clamp according to claim 7, 8 or 9, in which the first clamp (28) is arranged stationary.

11. A conveyor clamp according to any one of the claims 7 - 10, in which the first (28) and/or second clamp (29) are rounded at and near the clamping face (C).

12. A conveyor clamp according to any one of the claims 7 - 11, in which the receiving space (53), in horizontal direction towards the first clamp (28), is staggered with respect to the clamping face (C).

## Patentansprüche

1. Verfahren für das Empfangen und Sortieren von zu waschenden Kleidungsstücken (7) für eine Waschbehandlung, wobei die Kleidungsstücke als Bulkladung und unsortiert geliefert werden und mittels Transportmittel (5) von der Einnahmestelle (1) entlang einer oder mehreren Lesestationen (60) geführt werden, mit Hilfe wovon die für das betreffende Kleidungsstück gewählte und erforderliche Waschbehandlung festgestellt wird, wonach die Transportmittel durch von den Daten der Lesestationen geregelten Sortiermitteln (61) bedient werden, um die Kleidungsstücke nach Art Waschbehandlung zu gruppieren, **dadurch gekennzeichnet**, daß die Kleidungsstücke (7) bei Einnahme in an einer Schiene fortbewogene Transporthalter (10) gesetzt werden, und die Kleidungsstücke separat und in Serien, in den individuellen Transporthaltern auf geeigneten Zwischenräumen entlang der Lesestation (60) geführt werden.

2. Verfahren gemäß Anspruch 1, wobei die Kleidungsstücke (7) individuell in Transportklemmen (10) gehängt werden, die vorzugsweise vertikal gehalten werden, zumindest während Einfuhr und Entladung.

3. Verfahren gemäß Anspruch 1 oder 2, wobei die Kleidungsstücke (7) auf parallele Weise eingenommen und auf Transporthalter von parallelen Transportbahnen (5a; 5b) gehängt werden, wobei die parallelen Transportbahnen stromaufwärts der Lesestation (60) in eine Bahn vereinigt werden.

4. Verfahren gemäß Anspruch 1, 2 oder 3, wobei stromabwärts der Lesestation (60) eine Anzahl Kleidungsstückbehälter (13) aufgestellt sind, worüber die Transporthalter (10), insbesondere die Transportklemmen, bewogen werden, wobei die Sortiermittel (61) in Abhängigkeit von dem Abstand bis die Lesestation und der Transportgeschwindigkeit oder von einer Zählung der entlang der Lesestation und der Sortiermittel passierten Halter und von dem Ablesen der Lesestation, die Transporthalter für Entladung oberhalb von dem richtigen Kleidungsstückbehälter bedienen.

5. Verfahren gemäß Anspruch 1, 2 oder 3, wobei stromabwärts von der Lesestation (60) die Transportbahn (5) sich in zumindest eine Anzahl parallele an verschiedene Waschprogramme anzuweisende Transportbahnen (5c, 5d, 5e) teilt und die Halter (10) in Abhängigkeit von der Ablesung des Abstands bis die Lesestation und der Transportgeschwindigkeit, oder von einer Zählung der entlang der Lesestation (60) und der Sortiermittel (61) passierten Halter, zu den richtigen Transportbahnen geschickt werden.

6. Verfahren gemäß einem der vorhergehenden Ansprüche, worin die Kleidungsstücke (7) mit einem Chip versehen sind, worin Daten in bezug auf die Art Stoff, die Art Kleidungsstück, die Art Waschbehandlung, den Kunde, das Datum von Ankauf, usw aufbewahrt sind.

7. Transportklemme (10) für zu waschende Kleidungsstücke, umfassend einen Transportkarren (20) für Unterstützung auf einer Transportschiene (5), eine erste Klemme (28) und eine schwenkbare zweite Klemme (29), die mittels Verbindungsmittel (24-26) mit dem Transportkarren verbunden sind, wobei die erste Klemme und die zweite Klemme eine gegenseitige Klemmfläche (C) bestimmen und darüber einen Aufnahmeraum (53) für ein oberstes Teil eines zu klemmenden Kleidungsstücks bestimmen, **dadurch gekennzeichnet**, daß die erste Klemme derartig geformt ist, um oben die Klemmfläche (C) zurückzutreten um den Aufnahmeraum mitzubestimmen.

8. Transportklemme gemäß Anspruch 7, wobei die zweite Klemme (29) mit einem Nocken (31) versehen ist, der geeignet ist, um durch fest aufgestellte Nockenbedienungsmittel angegriffen zu werden bei Bewegung der Transportklemme (10) dort entlang.

9. Transportklemme gemäß Anspruch 7 oder 8, wobei beide Klemmen (28, 29) geformt sind um oben die Klemmefläche (C) zurückzuweichen, um den Aufnahmeraum (53) zu bestimmen.

10. Transportklemme gemäß Anspruch 7, 8 oder 9, wobei die erste Klemme (28) fest angeordnet ist.

11. Transportklemme gemäß einem der vorhergehenden Ansprüche 7-10, wobei die erste (28) und/oder zweite (29) Klemme an Ort und Stelle und in der Nähe der Klemmfläche (C) abgerundet sind.

12. Transportklemme gemäß einem der Ansprüche 7-11, wobei der Aufnahmeraum (53) in horizontaler Richtung zu der ersten Klemme (28) versetzt hinsichtlich der Klemmfläche (C) gelegen ist.

## Revendications

1. Procédé pour recevoir et trier pour un traitement de lavage des pièces de vêtement (7) qui doivent être lavées, et dans lequel les pièces de vêtement sont acheminés en vrac, non triées, et sont transportées à partir de l'emplacement d'entrée (1), le long d'une ou plusieurs stations de lecture par des moyens de transport (5), à l'aide desquels le procédé de lavage choisi et nécessaire pour chaque pièce de vêtement spécifique est déterminé, après quoi les moyens de transport sont actionnés par des moyens de tri (61) qui sont commandés par les données fournies par la station de lecture, afin de classer les pièces de vêtement en fonction du genre de procédé de lavage, caractérisé en ce que les pièces de vêtement (7) présentes à l'entrée sont placées dans des supports de convoyeur (10) qui sont entraînés sur un rail et les pièces de vêtement contenues dans les supports de convoyeur individuels sont transportées le long de la station de lecture (60) à des intervalles intermédiaires appropriés, en série et individuellement.

2. Procédé selon la revendication 1, dans lequel les pièces de vêtement (7) sont suspendues individuellement dans des pinces (10) de convoyeur, lesquelles pinces de convoyeur sont de préférence maintenues dans une position verticale, au moins pendant le chargement et le déchargement.

3. Procédé selon la revendication 1 ou 2, dans lequel les pièces de vêtement (7) sont reçues dans un mode parallèle et suspendues à des supports de convoyeur appartenant à des voies parallèles (5a ; 5b) du convoyeur, dans lequel les voies parallèles du convoyeur sont réunies en une seule voie en amont de la station de lecture (60).

4. Procédé selon la revendication 1, 2 ou 3, dans lequel, en aval de la station de lecture (60), sont agencés plusieurs conteneurs à vêtements (13) au-dessus desquels circulent les supports (10) du convoyeur, spécialement les pinces du convoyeur, et dans lequel les moyens de tri (61) actionnent les supports du convoyeur pour les décharger au-dessus du bon conteneur à vêtements, en fonction de la distance à la station de lecture et de la vitesse de transport, ou en fonction d'un comptage des supports qui ont franchi la station de lecture et les moyens de tri et en fonction de la lecture de la station de lecture.

5. Procédé selon la revendication 1, 2 ou 3, dans lequel, en aval de la station de lecture (60), la voie (5) du convoyeur se ramifie en au moins plusieurs voies parallèles (5c ; 5d ; 5e) du convoyeur qui peuvent être affectées à différents programmes de lavage, et les supports (10) sont envoyés aux bonnes voies du convoyeur en fonction de la lecture de la distance à la station de lecture (60) et de la vitesse de transport, ou en fonction d'un comptage des supports qui ont franchi la station de lecture et les moyens de tri (61).

6. Procédé selon une quelconque des revendications précédentes, dans lequel les pièces de vêtement (7) sont munies d'une puce sur laquelle est stockée la donnée qui se réfère au genre de matière, au genre de vêtement, au mode de lavage, au client, à la date d'achat, etc..

7. Pince de convoyeur (10) pour pièces de vêtement qui doivent être lavées, comprenant un chariot (20) destiné à prendre appui sur un rail (5) du convoyeur, une première pince (28) et une deuxième pièce articulée (29), lesquelles pinces sont reliées au chariot à l'aide de moyens de liaison (24-26), dans laquelle la première pince et la deuxième pince déterminent une face de serrage mutuel (C) et, au-dessus, déterminent un espace de réception (53) pour une partie supérieure d'une pièce de vêtement qui doit être pincée, caractérisée en ce que la première pince est configurée de manière à être en retrait au-dessus de la face de serrage (C) pour co-déterminer l'espace de réception.

8. Pince de convoyeur selon la revendication 7, dans laquelle la deuxième pince (29) est munie d'une came (31) qui est adaptée pour être attaquée par des moyens d'actionnement de came disposés en position fixe lorsque la pince (10) du convoyeur passe le long de cette came.

9. Pince de convoyeur selon la revendication 7 ou 8, dans laquelle les deux pinces (28, 29) sont configurées de manière à être en retrait au-dessus de la face de serrage (C) afin de déterminer l'espace de réception (53).

10. Pince de convoyeur selon la revendication 7, 8 ou 9, dans laquelle la première pince (28) est agencée fixe.

11. Pince de convoyeur selon une quelconque des revendications 7-10, dans laquelle la première pince (28) et/ou la deuxième pince (29) sont arrondies au niveau et à proximité de la face de serrage (C).

12. Pince de convoyeur selon une quelconque des revendications 7-11, dans laquelle l'espace de réception (53) est décalé par rapport à la face de serrage (C) dans une direction horizontale, vers la première pince (28).
